**Europäisches Patentamt**

**European Patent Office**

**Office européen des brevets**

(19)

(11) Veröffentlichungsnummer : **0 036 513**
**B1**

(12) **EUROPÄISCHE PATENTSCHRIFT**

(45) Veröffentlichungstag der Patentschrift :
24.08.83

(51) Int. Cl.³ : **G 01 F   1/58**

(21) Anmeldenummer : **81101496.8**

(22) Anmeldetag : **02.03.81**

(54) **Induktive Durchflussmesseinrichtung.**

(30) Priorität : **25.03.80 DE 3011510**

(43) Veröffentlichungstag der Anmeldung :
**30.09.81 Patentblatt 81/39**

(45) Bekanntmachung des Hinweises auf die Patenterteilung : **24.08.83 Patentblatt 83/34**

(84) Benannte Vertragsstaaten :
**DE FR GB IT NL**

(56) Entgegenhaltungen :
**DE A 1 773 484**
**DE A 2 637 307**

(73) Patentinhaber : **Fischer & Porter GmbH**
**Postfach 701 Dransfelder Strasse 2**
**D-3400 Göttingen (DE)**

(72) Erfinder : **Appel, Eggert**
**Imbser Weg 1**
**D-3402 Dransfeld (DE)**
Erfinder : **Kiene, Wilfried**
**Fuchsberg 33**
**D-3510 Hann-Münden (DE)**
Erfinder : **Meier, Dieter**
**Geismar Landstrasse 42**
**D-3400 Göttingen (DE)**

(74) Vertreter : **Weickmann, Heinrich, Dipl.-Ing. et al**
**Patentanwälte Dipl.-Ing. H. Weickmann Dipl.-Phys.Dr.**
**K. Fincke Dipl.-Ing. F.A. Weickmann Dipl.-Chem. B.**
**Huber Dr.-Ing. H. Liska Möhlstrasse 22**
**D-8000 München 86 (DE)**

Induktive Durchflußmeßeinrichtung

Die Erfindung betrifft eine induktive Durchflußmeßeinrichtung mit einem von einem Magnetfeld durchsetzten, innenseitig mit einer elektrisch isolierenden Schicht versehenen Meßrohr, in dem sich in einer Ebene senkrecht zur Längsachse des Rohres, über den Umfang mit gegenseitigem Abstand verteilt wenigstens zwei gegeneinander isolierte Elektroden befinden, die mit einem Spannungsmesser verbunden sind.

Es ist bekannt, bei solchen Einrichtungen die Meßrohre innenseitig mit einer elektrisch isolierenden Schicht zu versehen, die vollflächig aufgeklebt ist, vollflächig aufvulkanisiert ist oder aus vollflächig aufgebrachter Emaille besteht. Als Beschichtungsmaterial sind auch die Fluorcarbone PTFE, PFA, FEP, ECTFE bekannt. Diese Fluorcarbone haften jedoch nicht dauerhaft auf der Innenoberfläche der Meßrohre.

Es ist auch bekannt, auf die Innenoberfläche der Meßrohre elektrisch isolierende Schichten aufzusprühen oder thermisch aufzuschmelzen. Die derart erzeugten Schichten sind jedoch nur dünn oder amorph aufzubringen und im Ergebnis in ihren elektrischen Eigenschaften, insbesondere in ihren Isolationseigenschaften, schlecht definiert. Auch werden die Innenoberflächen solcher Schichten leicht porös, so daß im Laufe der Zeit die metallischen Meßrohre korrodieren.

Es ist auch bekannt, Meßrohre zur Bildung einer elektrisch isolierenden Schicht auf ihrer Innenoberfläche mit Schlauchmaterial auszukleiden oder Schlauchmaterial in sie isostatisch einzupressen. Hierdurch ist jedoch keine feste Haftung des Schlauchmaterials an der Innenoberfläche des Meßrohrs zu erreichen. Werden als Schlauchmaterial Fluorcarbone verwendet, so treten wegen Kaltfluß dieser Materialien unter mechanischer Belastung und wegen des großen thermischen Ausdehnungskoeffizienten dieser Materialien Beschädigungen des Schlauchmaterials auf. Insbesondere wegen machanischer Druck- oder Zugspannungen, herrührend von Einspannstellen des Schlauchmaterials entstehen im Schlauchmaterial Faltungen bei thermischer Belastung. Auch kann bei Vakuumschlägen im Meßrohr das Schlauchmaterial einfallen.

Aufgabe der Erfindung ist es demgegenüber, eine elektrisch isolierende Schicht auf der Innenseite eines Meßrohrs bei einer Durchflußmeßeinrichtung eingangs genannter Art vorzusehen, die dauerhaft ist, auf der Innenseite des Meßrohrs auch bei Belastungen haftet und im Laufe der Zeit auch nicht altert, insbesondere keine Risse erhält.

Zur Lösung dieser Aufgabe ist in die elektrisch isolierende Schicht ein ihre Ablösung von der Innenseite des Meßrohres verhinderndes dreidimensionales Versteifungsgerüst eingebettet.

Das Versteifungsgerüst besteht bevorzugt aus einem Gewebe, insbesondere einem Metallgewebe. Besonders vorteilhaft ist es, das Versteifungsgerüst stellenweise mit der Innenseite des Meßrohrs zu verbinden. Die isolierende Schicht kann dann in bekannter weise aus einem Fluorcarbon bestehen, dessen Vorteile man auf diese Weise nutzen kann, ohne seine Nachteile in Kauf nehmen zu müssen. Bei der Herstellung der elektrisch isolierenden Schicht wird bevorzugt das Versteifungsgerüst, also insbesondere das Metallgewebe, zunächst in das Meßrohr eingelegt und dann mit dem Material der isolierenden Schicht umspritzt.

Die Erfindung wird im folgenden an einem Ausführungsbeispiel unter Hinweis auf die beigefügten Zeichnungen beschrieben.

Figur 1 zeigt einen Längsschnitt durch ein bekanntes Meßrohr ;

Figur 2 zeigt das Meßrohr nach Fig. 1 im eingebauten Zustand nach Temperaturbelastung ;

Figur 3 zeigt das Meßrohr im eingebauten Zustand nach Vakuumbelastung ;

Figur 4 zeigt einen Querschnitt längs der Linie IV-IV in Fig. 3 ;

Figur 5 zeigt einen Längsschnitt durch ein erfindungsgemäß ausgebildetes Meßrohr.

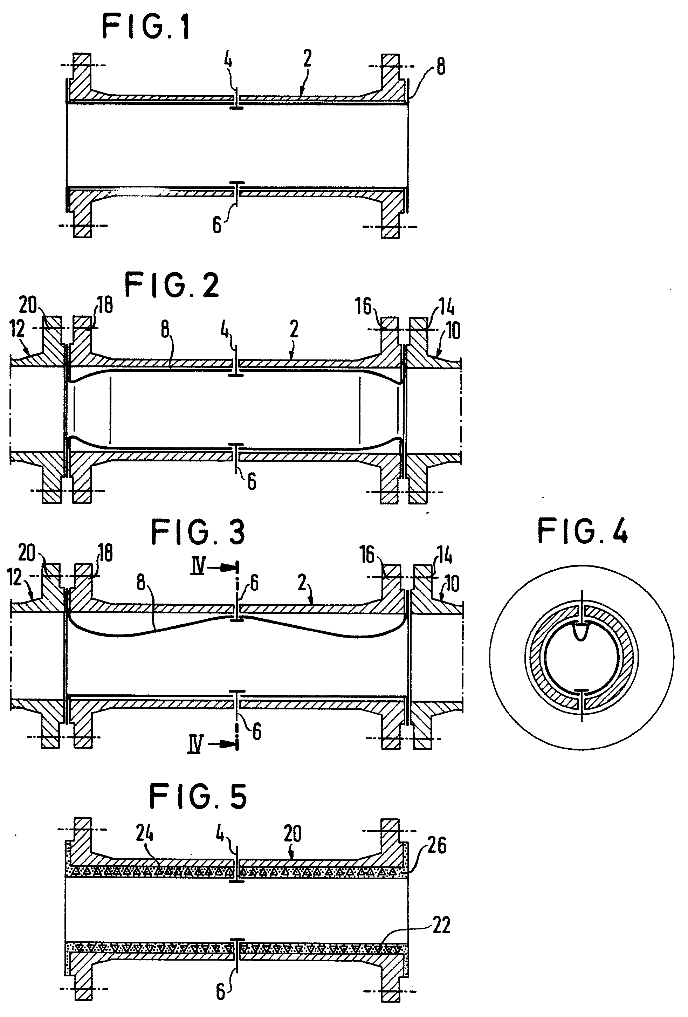

Fig. 1 zeigt ein metallisches Meßrohr 2 und zwei gegenüber dem Meßrohr isolierte Elektroden 4, 6 mit ihren Anschlußdrähten. In das Meßrohr 2 ist eine Schlauchauskleidung 8 eingezogen.

Fig. 2 zeigt das Meßrohr nach Fig. 1 eingebaut zwischen zwei Rohrabschnitte 10, 12. Die Verbindung zwischen den Rohrabschnitten 10, 12 und dem Meßrohr 2 erfolgt über Flansche 14, 16, 18, 20. Erfolgt nach einem solchen Einbau eine Temperaturbelastung, so löst sich die Schlauchauskleidung 8 in der Nähe der Flansche 16, 18 und bildet Falten, die schließlich zum Bruch des Schlauchmaterials führen.

Die Fig. 3 und 4 zeigen das entsprechend Fig. 2 eingebaute Meßrohr nach Vakuumbelastung. Ersichtlich ist die Schlauchauskleidung im oberen Bereich des Meßrohrs 2 eingefallen.

Fig. 5 zeigt ein metallisches Meßrohr 20, das innenseitig mit einem Metallgewebe 22 belegt ist. Das Metallgewebe 22 ist an einigen Stellen, wie der Stelle 24, mit dem Meßrohr verbunden und mit einer Fluorcarbonmasse 26 umspritzt. Die Fluorcarbonmasse 26 umfließt das durch das Metallgewebe 22 gebildete Versteifungsgerüst und wird stabil im Meßrohr 20 befestigt. Die stellenweise Befestigung des Metallgewebes 22 an der Innenseite des Meßrohrs 20 ist nicht notwendig, jedoch vorteilhaft. Gegenüber dem Stand der Technik wird schon dadurch eine wesentliche Verbesserung erzielt, daß das Metallgewebe 22 überhaupt als Versteifungsgerüst vorgesehen ist.

**Ansprüche**

1. Induktive Durchflußmeßeinrichtung mit einem von einem Magnetfeld durchsetzten, innenseitig mit einer elektrisch isolierenden Schicht (26) versehenen Meßrohr (20), in dem sich in einer Ebene senkrecht zur Längsachse des Rohres, über den Umfang mit gegenseitigem Abstand verteilt wenigstens zwei gegeneinander isolierte Elektroden (4, 6) befinden, die mit einem Spannungsmesser verbunden sind, dadurch gekennzeichnet, daß in die elektrisch isolierende Schicht (26) ein ihre Ablösung von der Innenseite des Meßrohrs (20) verhinderndes dreidimensionales Versteifungsgerüst (22) eingebettet ist.

2. Vorrichtung nach Anspruch 1, dadurch gekennzeichnet, daß das Versteifungsgerüst (22) aus einem Gewebe besteht.

3. Vorrichtung nach Anspruch 2, dadurch gekennzeichnet, daß das Gewebe ein Metallgewebe ist.

4. Vorrichtung nach einem der vorgenannten Ansprüche, dadurch gekennzeichnet, daß das Versteifungsgerüst (22) stellenweise (24) mit der Innenseite des Meßrohrs (20) verbunden ist.

5. Vorrichtung nach einem der vorgenannten Ansprüche, dadurch gekennzeichnet, daß die isolierende Schicht (26) aus einem Fluorcarbon besteht.

6. Vorrichtung nach einem der vorgenannten Ansprüche, dadurch gekennzeichnet, daß das im Meßrohr (20) befindliche Versteifungsgerüst (22) mit dem Material der isolierenden Schicht (26) umspritzt ist.

## Claims

1. Inductive flow-measuring device with a measuring tube (20) traversed by a magnetic field and provided on the inside with an electrically insulating layer (26), in which tube at least two electrodes (4, 6) insulated with respect to one another are situated in a plane perpendicular to the longitudinal axis of the tube and mutually spaced apart over the periphery, which electrodes are connected to a voltmeter, characterised in that a three-dimensional stiffening structure (22) is embedded in the electrically insulating layer (26), which structure prevents it from being detached from the inside of the measuring tube (20).

2. Apparatus according to Claim 1, characterised in that the stiffening structure (22) consists of a fabric.

3. Apparatus according to Claim 2, characterised in that the fabric is a metal mesh.

4. Apparatus according to Claim to one of the above Claims, characterised in that the stiffening structure (22) is connected at various places (24) to the inside of the measuring tube.

5. Apparatus according to one of the above Claims, characterised in that the insulating layer (26) consists of a fluorocarbon.

6. Apparatus according to one of the above Claims, characterised in that the material of the insulating layer (26) is injected over the stiffening structure (22) situated in the measuring tube (20).

## Revendications

1. Dispositif de mesure d'écoulement par induction, comportant un tube de mesure traversé par un champ magnétique et pourvu intérieurement d'une couche électriquement isolante, dans lequel se trouvent au moins deux électrodes isolées l'une par rapport à l'autre, situées dans un plan perpendiculairement à l'axe longitudinal du tube, réparties sur la circonférence avec un espacement mutuel et reliées à un mesureur de tension, caractérisé en ce que, dans la couche électriquement isolante (26), est incorporée une armature de renforcement (22) à trois dimensions, empêchant une séparation entre cette couche et la face intérieure du tube de mesure (20).

2. Dispositif selon la revendication 1, caractérisé en ce que l'armature de renforcement (22) est constituée d'un tissu.

3. Dispositif selon la revendication 2, caractérisé en ce que le tissu est métallique.

4. Dispositif selon l'une quelconque des revendications précédentes, caractérisé en ce que l'armature de renforcement (22) est reliée par endroits (24) à la face intérieure du tube de mesure (20).

5. Dispositif selon l'une quelconque des revendications précédentes, caractérisé en ce que la couche isolante (26) est constituée d'un fluorocarbone.

6. Dispositif selon l'une quelconque des revendications précédentes, caractérisé en ce que l'armature de renforcement (22) se trouvant dans le tube de mesure (20) est noyée dans le matériau injecté constituant la couche isolante (26).

## FIG.1

## FIG.2

## FIG.3

## FIG.4

## FIG.5

1